(19) Europäisches Patentamt
European Patent Office
Office européen des brevets

(11) **EP 2 429 854 B1**

(12) **FASCICULE DE BREVET EUROPEEN**

(45) Date de publication et mention de la délivrance du brevet:
**10.01.2018 Bulletin 2018/02**

(21) Numéro de dépôt: **10723718.2**

(22) Date de dépôt: **21.04.2010**

(51) Int Cl.:
***B60L 7/18*** *(2006.01)*      ***B60L 11/18*** *(2006.01)*

(86) Numéro de dépôt international:
**PCT/FR2010/050768**

(87) Numéro de publication internationale:
**WO 2010/130908 (18.11.2010 Gazette 2010/46)**

(54) **SYSTEME DE COMMANDE DU COUPLE AUX ROUES D'UN VEHICULE EQUIPE D'AU MOINS UN MOTEUR ELECTRIQUE**

SYSTEM ZUR STEUERUNG DES AN DIE RÄDER EINES MIT MINDESTENS EINEM ELEKTROMOTOR VERSEHENEN FAHRZEUGS ANGELEGTEN DREHMOMENTS

SYSTEM FOR CONTROLLING THE TORQUE APPLIED TO THE WHEELS OF A VEHICLE PROVIDED WITH AT LEAST ONE ELECTRIC MOTOR

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **11.05.2009 FR 0953084**

(43) Date de publication de la demande:
**21.03.2012 Bulletin 2012/12**

(73) Titulaire: **Renault S.A.S.**
**92100 Boulogne-Billancourt (FR)**

(72) Inventeur: **VESPASIEN, Jean-Marie**
**F-94600 Choisy-le-Roi (FR)**

(56) Documents cités:
**FR-A- 2 749 229          JP-A- 11 215 610**
**US-A1- 2003 132 044      US-A1- 2005 189 894**
**US-A1- 2006 022 519**

**Description**

La présente invention concerne un procédé de contrôle du freinage récupératif pour un véhicule à motorisation électrique ou pour un véhicule à motorisation hybride thermique/électrique. Dans le cas des véhicules hybrides par exemple, il est connu d'appliquer l'effort moteur ou d'entraînement du moteur thermique sur un premier train et l'effort moteur d'un moteur électrique sur un second train du véhicule. Dans le cas d'un véhicule tout électrique, la mise en mouvement du véhicule peut être obtenue par un seul moteur, relié par exemple à un train du véhicule, ou par plusieurs moteurs, par exemple un moteur par train du véhicule, ou un moteur associé à chaque roue. Nous désignerons par GMP (groupe moto propulseur) l'ensemble des moteurs dédiés à la propulsion (sur train avant comme sur train arrière) du véhicule, ainsi que les organes de transmission (embrayages, boîtes de vitesses) associés. Dans l'état de la technique, il est aussi connu, quand on dispose d'une machine électrique travaillant en moteur pour l'entraînement du véhicule, de la faire fonctionner en mode de freinage récupératif, c'est-à-dire que du point de vue électrique, cette machine, travaillant alors en génératrice, convertit l'énergie mécanique appliquée sur son rotor en un courant électrique qui peut alors être régulé dans un contrôleur de machine électrique comme courant de charge d'une batterie électrique. Dans ce mode de fonctionnement, la consommation d'énergie mécanique produite par la conversion électrique applique un couple de freinage aux roues du véhicule. Il en résulte d'une part que le véhicule peut être au moins partiellement freiné à l'aide de la machine électrique d'entraînement fonctionnant en génératrice, et d'autre part que l'énergie cinétique récupérée par le freinage peut être stockée sous forme électrique dans un accumulateur ou batterie, cette énergie étant réutilisable par la suite pour la propulsion du véhicule ou pour des fonctions accessoires. Le freinage récupératif peut être utilisé lors des phases de freinage proprement dites, c'est-à-dire quand le conducteur appuie sur la pédale de frein. Ce freinage récupératif est développé de manière préférentielle pour fonctionner lors des phases de décélérations sans freinage, c'est-à-dire quand le conducteur "lève le pied" de la pédale d'accélérateur, sans actionner la pédale de frein. On définit ainsi sur la course de la pédale d'accélération, un "point neutre", pour lequel le couple transmis aux roues par le GMP est nul. A delà du point neutre, le GMP fournit aux roues motrices un couple moteur. En deçà du point neutre, le GMP exerce un couple résistant sur les roues motrices. Ce couple résistant peut être intégralement (au rendement près) converti en énergie électrique dans le cas d'un véhicule tout électrique. Dans le cas du véhicule hybride, ce couple résistant peut se partager en couple engendré par le frein moteur (dû aux frottements des parties mécaniques, notamment des pistons dans les cylindres du moteur thermique), et en couple de freinage récupératif, converti en électricité par le moteur électrique.

Un procédé pour freiner un véhicule électrique en fonction de la vitesse de « levé de pied » de la pédale d'accélérateur est décrit dans le document FR 2749229.

Le document US 2005 0189894 décrit en particulier un dispositif de commande pour un véhicule hybride comprenant un moteur, un moteur/générateur et un dispositif de stockage d'énergie électrique relié au moteur/générateur. Ce dispositif comprend en outre des moyens pour consommer de l'énergie ainsi qu'un contrôleur programmé pour répartir l'énergie consommée ou produite par le moteur/générateur en fonction d'une mesure d'un état d'entraînement du véhicule, d'une quantité d'énergie disponible dans le dispositif de stockage d'énergie et d'un état de pleine charge.

La quantité de freinage récupératif à mettre en oeuvre dépend de l'énergie cinétique disponible, donc de la vitesse du véhicule, de l'énergie électrique convertie que peut absorber le véhicule, par consommation directe ou par stockage dans une batterie. Afin de prendre en compte ces variations, la demande de brevet US 2006/137925 propose de modifier par un calculateur les valeurs de couple moteur ou résistant associées aux différentes positions de la pédale d'accélération (que nous désignerons simplement par "pédale" dans la suite du texte), la modification étant effectuée en fonction du mode de fonctionnement d'un dispositif récupératif électrique ou hydraulique. La solution proposée est coûteuse à mettre en oeuvre, car elle suppose l'implantation d'un calculateur spécifique qui vient s'intercaler entre la pédale et le GMP, et des câblages du calculateur avec la pédale, le système récupératif, et le GMP. Le document ne précise pas comment est pris en compte le confort du conducteur lors des modifications du comportement de la pédale.

En outre, les batteries d'un véhicule ne peuvent être rechargées au-delà de leur niveau maximal de charge. Il convient donc de limiter le niveau de freinage récupératif au fur et à mesure que la batterie approche de son niveau de pleine charge, et de réamplifier ce freinage récupératif quand la charge de la batterie diminue. Le document ne propose pas non plus comment gérer ces variations en fonction du niveau de charge de la batterie.

L'invention a pour objectif un système de commande du couple aux roues par l'intermédiaire d'une pédale d'accélération (ou autre dispositif équivalent de transmission d'une consigne graduée), permettant au conducteur de doser le couple résistif ou moteur appliqué aux roues du véhicule, tout en faisant varier, en fonction de la charge de la batterie du véhicule, le couple résistif de décélération disponible. Le système doit préserver le confort de conduite du conducteur, notamment par une utilisation intuitive de la pédale, et par un caractère continu du comportement du véhicule.

L'invention a pour objet un procédé de commande du couple aux roues d'un véhicule équipé d'au moins un moteur électrique relié à une batterie et relié à au moins une roue motrice, le moteur étant apte à fonctionner en générateur pour recharger la batterie en décélérant le véhicule. On impose, sur le déplacement de la pédale d'accélération du véhicule, une première course de régulation de freinage et une deuxième course de régulation d'accélération, la course de régulation de freinage étant une fonction décroissante continue par rapport à la charge de la batterie. La course de régulation de freinage peut ainsi évoluer en fonction de la charge de la batterie entre une valeur maximale, par exemple comprise entre un 0.2 et 0.4 fois la course totale de la pédale, et une valeur minimale, qui peut être par exemple une course nulle.

Quand la pédale n'est pas sollicitée, on peut imposer un couple aux roues qui est une fonction de couple minimal, continue en fonction de la vitesse du véhicule et du niveau de charge de la batterie. Cette fonction traduit un couple moteur ou un couple nul sur un domaine de vitesses inférieures à une vitesse limite, et cette fonction traduit un couple résistif, non nul au moins en un point, de valeur absolue décroissante par rapport à la charge de la batterie, sur un domaine de vitesses supérieures à la vitesse limite.

Avantageusement, quand la pédale est à sa position de course maximale, le couple imposé aux roues est une fonction de couple maximal, traduisant un couple moteur qui varie continûment en fonction de la seule vitesse du véhicule.

De manière préférentielle, la fonction de couple maximal est une fonction de valeur absolue décroissante par rapport à la vitesse du véhicule.

Sur un domaine de vitesses supérieures à la vitesse limite, le point neutre de la pédale, c'est-à-dire le déplacement de la pédale pour lequel on n'impose ni couple moteur ni couple résistant à la roue, peut-être le produit d'une première fonction de non-saturation continue décroissante en fonction de la charge de la batterie, et d'une deuxième fonction continue croissante en fonction de la vitesse.

Dans un mode de mise en oeuvre préféré, la fonction de couple minimal est obtenue à partir d'une fonction de référence, cartographiée en fonction de la vitesse du véhicule, en imposant à cette fonction un seuil de couple résistif ou nul égal à un couple seuil de recharge de valeur absolue décroissante continue par rapport à la charge de la batterie.

La fonction de non-saturation peut être choisie égale au quotient du couple seuil de recharge par la valeur de plus fort couple résistif de la fonction de référence.

Avantageusement, pour une vitesse donnée du véhicule appartenant à un domaine de vitesses supérieures à la vitesse limite, la valeur du couple imposé à la roue varie linéairement en fonction de l'éloignement de la pédale par rapport à son point neutre, dans chacun des deux domaines de déplacement de la pédale de part et d'autre du point neutre.

Avantageusement, pour une vitesse donnée du véhicule, inférieure à la vitesse limite, la valeur du couple imposé à la roue varie linéairement sur toute la course de la pédale.

Selon un autre aspect, l'invention a pour objet un système de commande du couple aux roues d'un véhicule équipé d'au moins un moteur électrique relié à une batterie et relié à au moins une roue motrice. Le moteur est apte à fonctionner en générateur pour recharger la batterie en décélérant le véhicule. Le système comprend une pédale d'accélération reliée à une unité de contrôle électronique. L'unité de contrôle électronique est configurée pour imposer, en fonction de la position de la pédale, un couple moteur ou un couple résistant à la roue motrice par l'intermédiaire d'un groupe motopropulseur incluant le moteur électrique. L'unité de contrôle électronique impose, sur le déplacement de la pédale d'accélération, une première course de régulation de freinage et impose, sur le déplacement de la pédale d'accélération, une deuxième course de régulation d'accélération dont l'amplitude est une fonction croissante continue par rapport à la charge de la batterie.

Selon une variante de réalisation, le groupe motopropulseur ne comprend que des moteurs électriques.

Selon une autre variante de réalisation, le groupe motopropulseur comprend au moins un moteur thermique et au moins un moteur électrique.

La présente invention sera mieux comprise à la lecture de la description détaillée d'un mode de réalisation pris à titre d'exemple nullement limitatif et illustré par les dessins annexés, sur lesquels :

- la figure 1 est une représentation schématique d'un véhicule hybride équipé d'un système de commande suivant l'invention ;
- la figure 2 est un exemple de courbe cartographiée utilisée par le système de commande de la figure 1 ;
- la figure 3 est un exemple de courbe déduite d'une cartographie utilisée par le système de commande de la figure 1 ;
- la figure 4 est une représentation en trois dimensions d'une fonction de consigne de couple minimal, utilisée par le système de commande de la figure 1 ;
- la figure 5 illustre un mode de lecture des figures 2 et 3 ;
- la figure 6 est un exemple de courbes cartographiées utilisées par le système de commande de la figure 1 ;
- la figure 7 est un diagramme résumant un procédé de commande suivant l'invention.

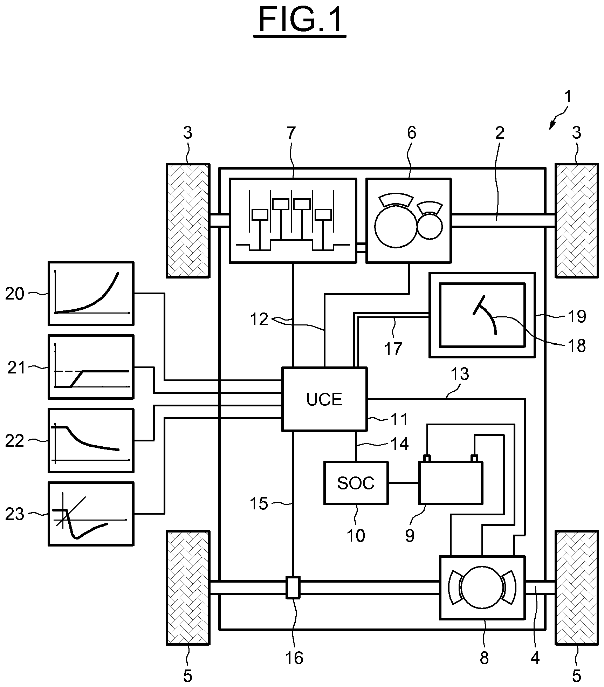

Comme illustré sur la figure 1, un véhicule hybride 1 est muni d'un essieu avant 2 portant deux roues motrices 3 et est muni d'un essieu arrière 4 portant deux roues motrices 5. Les roues avant 3 peuvent être entraînées en rotation par un moteur thermique 7, par l'intermédiaire d'un système de transmission 6 comprenant notamment un embrayage et une boîte de vitesses.

Un moteur électrique 8 est disposé de manière à pouvoir être rendu solidaire en rotation avec les roues arrière 5, par l'intermédiaire d'un réducteur (non représenté). Le moteur électrique 8 est connecté à une batterie 9 dans laquelle il peut puiser de l'énergie électrique pour appliquer un couple moteur aux roues 5, ou vers laquelle il peut envoyer du courant électrique produit quand le moteur applique un couple résistif aux roues 5 aussi appelé « couple de freinage récupératif ». La batterie 9 est reliée à un calculateur local 10, apte à calculer une valeur S.O.C. (« State Of Charge ») traduisant le niveau de charge de la batterie 9.

Une unité de contrôle électronique 11 pilote au travers de connexions 12 et 13 respectivement, les couples appliqués par le moteur thermique 7 et par le moteur électrique 8 au train de roues avant et au train de roues arrière du véhicule. L'unité de contrôle électronique comprend, de façon classique, un microprocesseur ou unité centrale, des mémoires vives, des mémoires mortes, des convertisseurs analogiques numériques, et différentes interfaces d'entrée et de sortie.

L'unité de contrôle électronique 11 est en outre reliée par une connexion 14 au calculateur d'état de charge 10, et par une connexion 15 à un compte-tours 16 disposé au niveau d'un des trains de roues du véhicule et lui permettant d'évaluer une vitesse d'avancement V du véhicule. L'unité de contrôle électronique 11 est également reliée par un groupe de connexions 17 à une interface homme-machine 19 comportant notamment une pédale d'accélération 18. L'unité de contrôle électronique 11 contient dans des mémoires internes ou externes des cartographies 20, 21, 22 et 23 dans lesquelles sont cartographiées des fonctions de la vitesse V du véhicule et de la charge S.O.C. de la batterie. L'unité de contrôle électronique 11 reçoit par les connexions 17 une valeur $\alpha$ traduisant la position de la pédale d'accélération 18. La valeur $\alpha$ peut être par exemple une position angulaire relative de la pédale, en prenant pour position d'origine « 0 » la position où la pédale est libre, c'est-à-dire où le conducteur ne pose pas le pied sur la pédale, et en affectant la valeur « 1 » à la position d'enfoncement maximal de la pédale.

L'unité de contrôle électronique reçoit par les connexions 14 une valeur S.O.C. traduisant l'état de charge de la batterie 9. A l'aide de la valeur d'état de charge S.O.C. de la batterie, de la position angulaire $\alpha$ de la pédale 18, et de la vitesse V du véhicule mesurée à l'aide du compte-tours 16, en utilisant les cartographies 20, 21, 22 et 23, l'unité de contrôle électronique 11 détermine, suivant la méthode que nous décrivons plus loin, une consigne C de couple aux roues qui doit être appliquée aux roues par l'intermédiaire des moteurs 7 et 8. Si la consigne de couple C est une valeur positive, c'est-à-dire que le conducteur demande un couple moteur aux roues, l'UCE actionne soit le moteur électrique, soit le moteur thermique, soit les deux moteurs simultanément pour obtenir le couple désiré.

La répartition du couple C de propulsion entre les deux types de moteurs peut par exemple dépendre des réserves d'énergie électrique et de carburant disponibles (par exemple, moteur 8 fonctionnant en générateur de courant en prélevant de l'énergie sur le couple délivré par le moteur thermique 7), ou d'une demande spécifique du conducteur par l'intermédiaire de l'interface homme-machine 19 (par exemple une circulation en mode électrique exclusif en ville). Dans le cas où le couple de consigne C est négatif, c'est-à-dire que le conducteur du véhicule demande un couple de freinage ou une décélération du véhicule, le couple résistif sera la somme d'un couple de frein moteur développé par le moteur thermique 7, correspondant notamment au frottement des pistons dans les cylindres du moteur 7, et d'un couple de freinage récupératif développé par le moteur électrique 8, permettant de produire du courant électrique et de l'envoyer vers la batterie 9.

L'unité de commande électronique 11 commande alors le moteur thermique 7 pour adapter le frein moteur à la vitesse du véhicule, et commande le moteur thermique 8 de manière à ce qu'il développe un couple résistif complémentaire permettant d'obtenir le couple résistif total de consigne C.

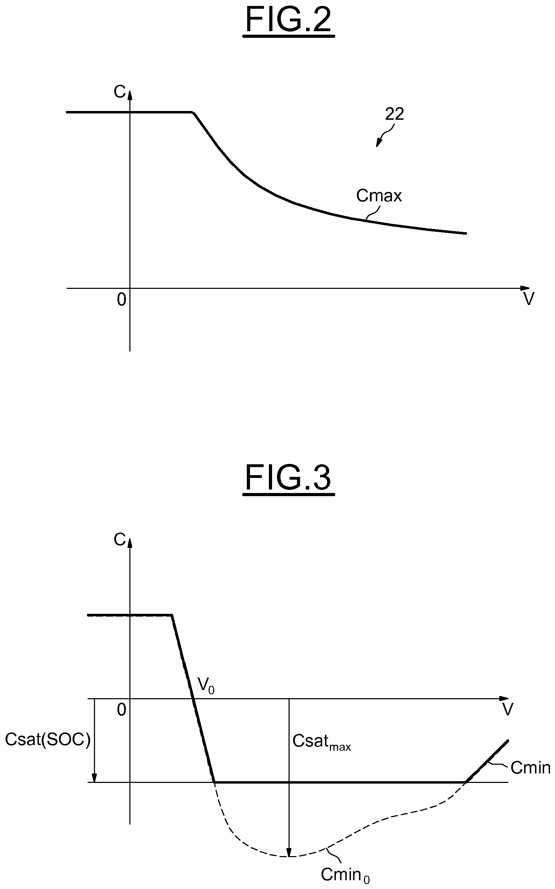

La figure 2 représente une des courbes de fonctionnement du système de la figure 1, qui peut correspondre par exemple à la cartographie 22 de la figure 1. Sur cette figure 2, est représentée une courbe Cmax représentant une consigne C de couple moteur (couple positif avec la convention de signe choisie) délivrée par l'UCE quand la pédale d'accélération est à sa position de déplacement maximal, c'est-à-dire quand $\alpha=1$. Cette consigne de couple moteur est une fonction de la seule vitesse V du véhicule. Elle est strictement positive, et décroissante en fonction de la vitesse V. Le domaine couvert par cette courbe comprend les vitesses positives du véhicule et s'étend également jusqu'à des vitesses négatives de l'ordre de quelques kilomètres/heure. Ces vitesses faiblement négatives correspondent au cas où le véhicule recule alors qu'un couple moteur positif est appliqué aux roues, par exemple quand le véhicule tente d'avancer face à une pente. Cette fonction de couple maximal Cmax est particulièrement adaptée au cas de véhicules à propulsion exclusivement électrique. On peut envisager dans le cas de véhicules à propulsion hybride, des fonctions de couple maximal qui ne sont pas décroissantes sur toute la plage de vitesses du véhicule.

La figure 3 illustre des courbes de fonctionnement du système de la figure 1, qui peut par exemple être construites à partir des cartographies 20 et 23 de la figure 1. Cette figure 3 permet de lire une courbe en trait plein représentant un couple de consigne Cmin délivrée par l'unité de contrôle électronique quand la pédale 18 est en position entièrement relevée, c'est-à-dire quand $\alpha=0$. Cette consigne de couple Cmin est représentée ici pour un état donné S.O.C. de charge de la batterie. Pour chaque valeur d'état de charge S.O.C., le couple consigne Cmin est une fonction de la vitesse V du véhicule. Pour des valeurs faibles ou légèrement négatives de la vitesse du véhicule, la consigne de couple Cmin est positive, c'est-à-dire qu'un couple moteur est appliqué aux roues. La consigne de couple Cmin diminue ensuite en fonction de la vitesse du véhicule, s'annule pour une vitesse $V_0$ et reste négative (couple résistif) pour les valeurs supérieures à $V_0$. Dans le domaine des vitesses supérieures à $V_0$, le couple Cmin est d'abord décroissant avec la vitesse, passe par un minimum puis croît à nouveau, c'est-à-dire diminue en valeur absolue, pour les vitesses élevées du véhicule. La courbe de comportement ainsi définie permet d'avoir un comportement du véhicule en fonction de la vitesse du véhicule qui se rapproche du comportement usuel d'un véhicule à moteur thermique à boîte de vitesse séquentielle.

Chaque courbe de couple consigne Cmin de pied levé correspondant à un état de charge S.O.C. de la batterie peut se déduire d'une courbe directrice $Cmin_0$, représentée en pointillés, et qui est mémorisée dans la cartographie 23 de la figure 1. Chaque courbe de couple minimal Cmin, correspondant à un état de charge donne S.O.C. de la batterie, est obtenue en minorant en valeur absolue la courbe $Cmin_0$ par une valeur de couple résistif Csat, qui est aussi fonction de l'état de charge de la batterie. Le couple résistif de plus grande valeur absolue que l'on peut lire sur la courbe directrice $Cmin_0$ est désignée par la valeur $Csat_{max}$. Pour les faibles valeurs de charge de la batterie, la valeur Csat est égale au minimum $Csat_{max}$ de la courbe $Cmin_0$. La courbe de couple consigne Cmin correspondant à la charge actuelle de la batterie, est alors confondue avec la courbe directrice $Cmin_0$. Au fur et à mesure que la charge de la batterie augmente, la valeur Csat, qui représente le couple résistif maximal que peut opposer au déplacement du véhicule 1 le groupe motopropulseur constitué des moteurs électrique 8 et thermique 7, diminue en valeur absolue. Quand la batterie ne peut plus être chargée davantage, il atteint une valeur de couple résistif correspondant au seul couple frein moteur du moteur 7.

La valeur minorante Csat peut être cartographiée en fonction de la valeur S.O.C. de charge de la batterie. Cette valeur minorante Csat peut également être cartographiée de manière indirecte, par exemple dans une cartographie 20 de la figure 1, par l'intermédiaire d'une fonction de saturation $\tau$, continue croissante par rapport à l'état de charge S.O.C. Cette fonction $\tau$ est par exemple choisie comme le complément à 1 du rapport entre le couple minorant Csat, correspondant à la charge actuelle de la batterie, et du plus fort couple résistif disponible $Csat_{max}$ quand la batterie est à son niveau de charge minimale, c'est-à-dire :

$$\tau(\text{SOC}) = 1 - \frac{\text{Csat}(\text{SOC})}{\text{Csat}_{max}}.$$

L'UCE 11 peut ainsi déduire le couple minorant Csat à l'aide de la cartographie 20 à l'aide de la relation

$$\text{Csat}(\text{SOC}) = \text{Csat}(\tau) = (1 - \tau)\,\text{Csat}_{max}.$$

La fonction $\tau$ est continue croissante entre zéro (pour une batterie à son niveau de charge minimal) et une valeur maximale $\tau_{max}$ inférieure ou égale à 1. La valeur $\tau_{max}$ est égale à 1 dans le cas d'un véhicule à propulsion exclusivement électrique, car un tel véhicule ne dispose pas d'un couple de frein moteur thermique. La fonction de saturation $\tau$ peut être employée à la place de la valeur S.O.C., comme valeur indicative du niveau de charge de la batterie. On peut envisager des variantes de l'invention où le calculateur 10 délivrerait directement la valeur $\tau$ pour quantifier l'état de charge de la batterie.

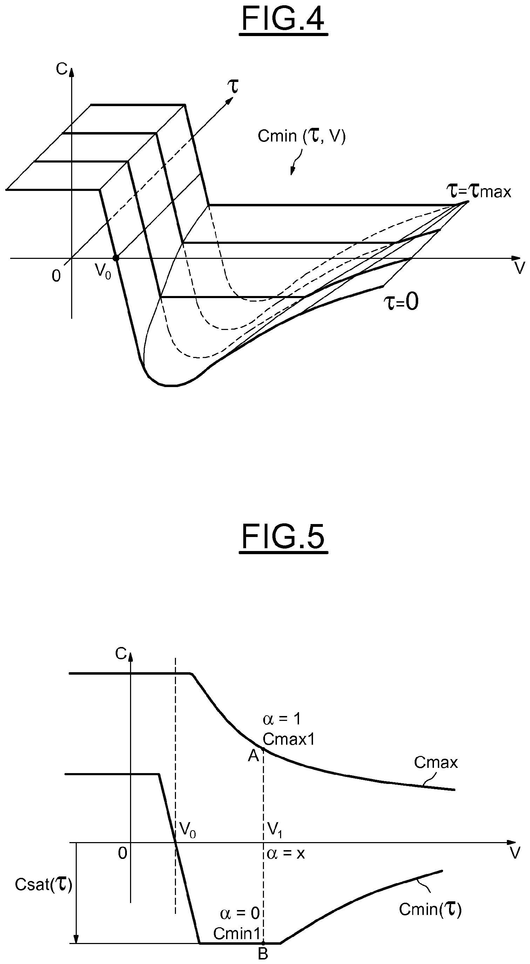

En choisissant de faire varier la valeur minorante Csat comme une fonction continue de la charge de la batterie, de valeur absolue décroissante quand la charge de la batterie augmente, on obtient une surface de valeur Cmin représentant le couple consigne délivré par l'UCE quand la pédale 18 est relevée. La fonction Cmin ainsi définie, représentée sur la figure 4, est une fonction continue de la vitesse V du véhicule et de la charge de la batterie, cette charge de la batterie pouvant être représenté soit par la variable SOC initiale, soit par la fonction de saturation $\tau$.

La figure 5 est une illustration graphique du domaine de variation du couple consigne imposé aux roues par l'unité de contrôle électronique 11 de la figure 1, en fonction de la vitesse V du véhicule et pour une charge donnée S.O.C. de la batterie, caractérisée par une valeur $\tau$ de la fonction de saturation. Pour une vitesse du véhicule V1 supérieure à la vitesse limite $V_0$, le domaine des couples consigne à la pédale est délimité par le segment de droite AB. Le point A correspond à la position complètement enfoncée de la pédale, c'est-à-dire une valeur $\alpha=1$. Pour $\alpha=1$, le couple appliqué aux roues est un couple moteur de valeur Cmax1 qui se lit en fonction de la vitesse V sur la courbe Cmax de la figure 2. Le point B correspond à la position complètement relâchée de la pédale, c'est-à-dire $\alpha=0$. Le couple de consigne imposé aux roues est alors un couple résistant de valeur Cmin1, qui peut se déduire suivant la construction de la figure 3 à partir d'une courbe directrice $Cmin_0$ en fonction de V, minorée par une valeur de couple seuil $Csat(\tau)$ qui est fonction du niveau de charge de la batterie. Entre les deux positions angulaires extrémales $\alpha=0$ et $\alpha=1$, le couple de consigne s'annule pour une position angulaire désignée par la lettre X.

Pour les valeurs de vitesse inférieures à $V_0$, le couple de consigne varie entre une valeur de couple strictement positive Cmax et une valeur de couple positive ou nulle Cmin. On considère alors par convention que la valeur de point neutre X est égale à 0.

Pour les vitesses supérieures à $V_0$, le couple résistif maximal Csat$(\tau)$ que le conducteur peut obtenir en relâchant la pédale de l'accélérateur diminue avec la charge de la batterie. L'invention propose aussi de faire diminuer, quand la charge de la batterie augmente, la course de la pédale allouée à des couples résistifs.

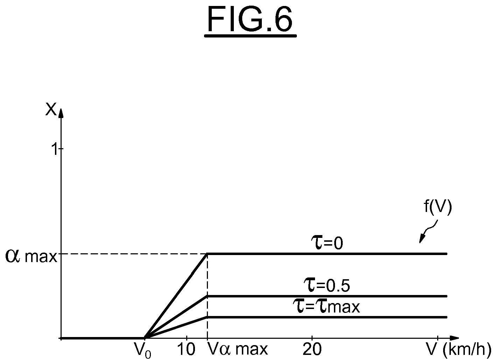

La figure 6 illustre un mode de variation possible de la fonction de point neutre X définie à la figure 5. La fonction $X(\tau, V)$ représentée à la figure 5 est le produit d'une fonction continue f(V) et d'une fonction g qui est continue en fonction de la charge S.O.C. de la batterie, et décroissante par rapport à cette charge. On peut alors, de manière équivalente, dire qu'elle est continue et décroissante par rapport à la fonction de saturation $\tau$. On peut par exemple choisir la fonction g égale au complément à 1 de la fonction de saturation $\tau$, c'est-à-dire g=1-$\tau$.

Dans l'exemple illustré sur la figure 6, la fonction f est la fonction nulle pour les vitesses inférieures à la vitesse limite $V_0$. La fonction f est égale à une position limite $\alpha_{max}$ pour les vitesses supérieures à une vitesse V$\alpha_{max}$. La fonction f est croissante par exemple de manière linéaire entre $V_0$ et V$\alpha_{max}$. La valeur $\alpha_{max}$ est la course maximale à la pédale que l'on souhaite allouer à la régulation d'un couple de freinage. Elle peut par exemple représenter un tiers environ de la course totale de la pédale, par exemple, être comprise entre 0,2 et 0,4. La fonction X, qui est définie comme le produit de la fonction f continue par rapport à la vitesse du véhicule, et de la fonction g continue par rapport à la charge de la batterie, est donc une fonction continue de la vitesse et de la charge.

La vitesse V$\alpha_{max}$ est de quelques km/h supérieure à la vitesse limite $V_0$. Ces deux vitesses peuvent typiquement être comprises entre 5 et 15 km/heure, par exemple $V_0$ aux alentours de 7 à 8 km/heure et V$\alpha_{max}$ aux alentours de 9 à 11 km/heure. Les vitesses inférieures à $V_0$ correspondent aux vitesses où le véhicule est en mode de rampage, c'est-à-dire où le véhicule tend à avancer même si le conducteur relève complètement le pied de la pédale d'accélération. La vitesse V$\alpha_{max}$ est une vitesse de transition au-delà de laquelle le point neutre ne varie plus en fonction de la vitesse, afin de rendre l'utilisation de la pédale plus intuitive pour le conducteur.

La variation linéaire entre les vitesses $V_0$ et V$\alpha_{max}$ assure une continuité de comportement à la pédale entre le démarrage du véhicule et le moment où le véhicule atteint une vitesse de croisière. Pour un taux de saturation $\tau$=0, c'est-à-dire pour une batterie peu ou pas chargée, le point neutre varie comme la fonction f(V). Au fur et à mesure que la batterie se charge et que le taux de saturation $\tau$ augmente, la fonction X=f(V)*g$(\tau)$ diminue. Quand la batterie est complètement chargée, le taux de saturation $\tau$ atteint une valeur $\tau_{max}$ qui dépend du couple de frein moteur disponible sur le véhicule. Si le frein moteur est faible, $\tau_{max}$ sera proche de la valeur 1 et la fonction $X(\tau, V)$ sera proche de la fonction nulle.

Une fois que la position du point neutre X a été définie pour la vitesse courante du véhicule et la charge courante de la batterie, on associe à chaque position $\alpha$ de la pédale, une consigne C de couple aux roues. On le fait de manière à ce que, entre la position de point neutre $\alpha$=X et la position $\alpha$=1 d'enfoncement maximal de la pédale, la variation de couple aux roues soit continue et strictement croissante. On le fait également de manière à ce que, entre la position $\alpha$=0 d'enfoncement minimal de la pédale et la position de point neutre $\alpha$=X, la variation de couple aux roues soit continue et strictement croissante, c'est-à-dire décroissante en valeur absolue (puisque le couple est un couple résistif, négatif avec la convention de signe choisie).

On peut par exemple faire varier le couple aux roues proportionnellement à la distance au point neutre $(\alpha$-X) pour les valeurs de vitesses V supérieures à $V_0$ et pour $\alpha$ compris entre X et 1, suivant la fonction affine C$(\alpha)$ suivante :

$$C(\alpha) = \frac{\alpha - X(\tau, V)}{1 - X(\tau, V)} * C\max(V)$$

Pour les valeurs de vitesses V supérieures à $V_0$ et pour $\alpha$ compris entre 0 et X, on peut également faire varier le couple C de manière linéaire par rapport à la distance au point neutre X-$\alpha$, suivant la fonction affine C$(\alpha)$ suivante :

$$C(\alpha) = \frac{X(\tau, V) - \alpha}{X(\tau, V)} * C\min(\tau, V)$$

Pour les vitesses inférieures à la vitesse limite $V_0$, le point neutre X est pris égal à zéro par convention, et on n'a pas de changement de signe du couple consigne entre les deux positions extrémales de la pédale. On peut alors faire varier le couple consigne suivant la fonction affine C$(\alpha)$ suivante :

$$C(\alpha) = C\min(\tau, V) + \alpha(C\max(V) - C\min(\tau, V)).$$

Les trois fonctions affines définies sur les trois domaines précédents peuvent se résumer en une fonction continue affine par morceaux dont l'expression est la suivante :

$$C(\alpha) = \max\left[1 - \frac{\alpha}{X(\tau,V)};0\right] * \min[0;C\min(\tau,V)]$$

$$+ \max\left[\frac{\alpha - X(\tau,V)}{1 - X(\tau,V)};0\right] * C\max(V) + (1-\alpha)*\max[C\min(\tau,V);0]$$

(équation 1)

On obtient ainsi une variation continue du couple consigne C par rapport aux positions $\alpha$ de la pédale, qui respecte les valeurs de consigne de couple maximal Cmax et de couple minimal Cmin, ainsi que la position du point neutre X.

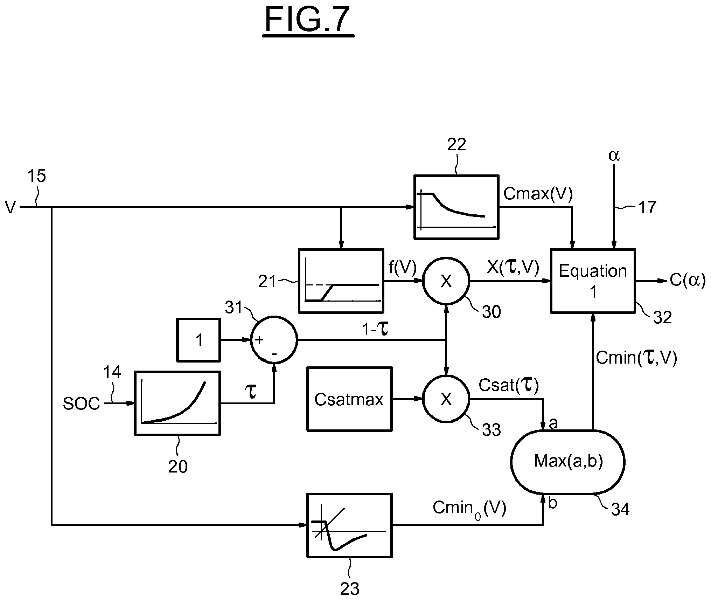

La figure 7 est un diagramme résumant un procédé d'évaluation de la consigne C($\alpha$) de couple aux roues, par l'unité de contrôle électronique 11 de la figure 1. La figure 7 comporte des éléments communs à la figure 1, les mêmes éléments portant alors les mêmes références. L'unité de contrôle électronique 11 reçoit par la connexion 15 une valeur V correspondant à la vitesse du véhicule. Elle utilise cette valeur V pour lire dans la cartographie 22 une valeur de couple maximale Cmax(V) correspondant au couple aux roues qui serait attribué à cette vitesse du véhicule, si la pédale d'accélération était dans sa position d'enfoncement maximal. Elle envoie cette valeur Cmax(V) sur une entrée d'un évaluateur 32.

L'unité de contrôle électronique 11 utilise également la valeur V pour lire dans la cartographie 21 une valeur f(V) correspondant à la position du point neutre qu'aurait la pédale pour cette même vitesse V si la batterie était à son niveau de charge minimal. L'unité de contrôle électronique 11 envoie cette valeur f(V) sur une première entrée d'un multiplicateur 30.

L'unité de contrôle électronique 11 utilise enfin la valeur V de la vitesse du véhicule pour lire dans une cartographie 23 une valeur $Cmin_0(V)$ qui serait la valeur du couple imposée aux roues pour cette même vitesse V si la pédale d'accélération était complètement relâchée et si la charge de la batterie était à son niveau minimal. Elle envoie cette valeur sur une entrée d'un comparateur 34.

L'unité de contrôle électronique 11 reçoit par ailleurs par une connexion 14, une valeur S.O.C. traduisant l'état de charge de la batterie. Elle utilise cette valeur S.O.C. pour lire dans la cartographie 20 une valeur $\tau$ traduisant un taux de saturation du couple résistif disponible. Cette valeur $\tau$ est envoyée sur l'entrée négative d'un soustracteur 31 qui reçoit sur son entrée positive la valeur 1. La sortie du soustracteur 31, qui délivre une valeur ($1-\tau$), est reliée à une entrée du multiplicateur 30. La sortie du multiplicateur 30 délivre une valeur de point neutre X($\tau$,V) qui est envoyée sur une entrée de l'évaluateur 32.

La sortie du soustracteur 31 est également reliée à une entrée d'un multiplicateur 33 qui reçoit sur une deuxième de ses entrées une valeur constante $Csat_{max}$ qui est la valeur correspondant au couple résistif le plus élevé que l'on peut lire sur la courbe de la cartographie 23.

La sortie du multiplicateur 33 délivre une valeur Csat($\tau$) qui est envoyée sur une entrée du comparateur 34.

Le comparateur 34 compare les deux couples résistifs Csat($\tau$) et $Cmin_0(V)$, attribue une valeur Cmin($\tau$,V) à celui des deux couples qui a la plus petite valeur absolue, et l'envoie sur une entrée de l'évaluateur 32.

L'évaluateur 32 reçoit donc sur trois premières entrées une valeur de couple maximale Cmax(V), une valeur de couple minimale Cmin($\tau$,V), et une position de point neutre X($\tau$,V).

L'unité de contrôle électronique 11 reçoit par la connexion 17 une valeur $\alpha$ représentant la position de la pédale 18. Elle envoie cette valeur $\alpha$ sur une quatrième entrée de l'évaluateur 32, qui, en utilisant les valeurs $\alpha$, Cmax(V), Cmin($\tau$,V), et X($\tau$,V), calcule par l'équation 1, le couple consigne aux roues C($\alpha$).

L'invention ne se limite pas aux modes de réalisation décrits et peut faire l'objet de nombreuses variantes. La pédale d'accélération peut bien sûr être remplacée par tout autre dispositif équivalent de transmission d'une consigne graduée, par exemple une poignée rotative, et/ avoir une détection de course linéaire au lieu d'une course angulaire.

Afin d'améliorer encore la continuité de comportement du véhicule, un lissage dans le temps de la fonction de saturation $\tau$ peut être effectué, pour éviter un changement de comportement à la pédale lors de la mise en route d'un consommateur électrique important.

Les fonctions Cmin et Cmax utilisées dans le procédé peuvent être toutes deux variables en fonction de la charge de la batterie, et peuvent être éventuellement cartographiées directement en fonction des deux variables vitesse du véhicule/charge de la batterie, au lieu d'être recalculées à partir d'une courbe directrice.

Les courbes de point neutre $X_\tau(V)$ peuvent aussi être définies comme le produit d'une fonction f(V) par un coefficient g($\tau$) différent de ($1-\tau$). La fonction g($\tau$) sera alors une fonction continue décroissante de $\tau$. Dans ce cas, la fonction g pourra faire l'objet d'une cartographie spécifique en fonction du taux de charge S.O.C de la batterie ou en fonction du taux de saturation $\tau$ du couple résistif disponible.

L'invention peut s'appliquer aussi bien à un véhicule à motorisation hybride qu'à un véhicule à motorisation exclusivement électrique. Dans le cas du véhicule tout électrique, quand la batterie est pleinement chargée, il n'y a ni frein moteur ni frein récupératif disponible : on attribue alors à $\tau$ la valeur 1, et le point neutre reste confondu avec la position en pied levé (X =0) sur toute la plage de vitesses.

On peut envisager une variante "à comportement constant" du système, dans laquelle la consigne de couple à pied levé suit toujours la courbe $Cmin_o$, et le conducteur obtient toujours le même couple pour une vitesse et une position de pédale d'accélération données. Le système utilise alors les mêmes courbes Cmin que précédemment, pour déterminer le couple de freinage récupératif à appliquer (ou, pour un moteur hybride, la somme du couple de freinage récupératif et du couple de frein moteur), et utilise la courbe $Cmin_o$ pour calculer un complément de freinage hydraulique qui vient s'ajouter au freinage récupératif quand la batterie du véhicule est pleine. Dans cette variante, la position du point neutre est une fonction de la seule vitesse du véhicule.

Le véhicule peut comporter plusieurs moteurs électriques ou plusieurs moteurs thermiques. Le couple imposé par l'UCE suivant l'invention sera alors le couple total appliqué aux roues. Dans le cas du moteur hybride, ce couple peut dans certaines configurations être la somme d'un couple moteur développé par le moteur thermique, et d'un couple de freinage récupératif mis simultanément en oeuvre pour recharger la batterie.

Il est également à noter que les explications précédentes se basent sur une convention attribuant une valeur positive à un couple moteur, et une valeur négative à un couple résistant. Un système de commande suivant l'invention pourrait utiliser une convention de signe opposée, les sens de variation des courbes étant à redéfinir en conséquence. On pourrait de même choisir la convention inverse pour le signe de vitesse du véhicule en choisissant négatives les vitesses dans le sens d'avancement du véhicule. Les descriptions sur les sens de variation et les signes des courbes seraient à adapter en conséquence.

La réalisation de l'invention sous forme de blocs de calculs, peut se faire à partir de composants électroniques ou de calculateurs physiquement indépendants, ou être réalisée en programmant tous les blocs logiques et les blocs de calculs décrits sous forme logicielle. Le programme correspondant, ainsi que ses sous programmes, peuvent être implantés dans un ou plusieurs calculateurs, intégrés ou non à une unité de commande électronique centrale.

Le système suivant l'invention permet au conducteur de doser intuitivement le couple à appliquer aux roues tant que le freinage "de pied levé" est disponible. L'évolution du comportement du véhicule varie progressivement en fonction de l'état de charge de la batterie. On évite ainsi au conducteur d'être surpris par des variations soudaines de couple, et on lui permet de s'habituer à la plage de comportement en cours. Dans sa variante "à comportement constant", le système est transparent pour l'utilisateur. Dans cette variante, le système permet de répartir l'effort de décélération entre freinage récupératif et freinage hydraulique dissipatif en optimisant la recharge de la batterie.

Le système permet d'optimiser le bilan énergétique du véhicule et la durée de vie de la batterie, donc l'empreinte écologique globale. Il assure une conduite intuitive du véhicule, ce qui contribue au confort du conducteur et à la sécurité des passagers.

## Revendications

1. Procédé de commande du couple aux roues (3, 5) d'un véhicule (1) équipé d'au moins un moteur électrique (8) relié à une batterie (9) et relié à au moins une roue motrice (5), le moteur étant apte à fonctionner en générateur pour recharger la batterie en décélérant le véhicule, dans lequel on impose, sur le déplacement total de la pédale d'accélération (18) du véhicule, une première partie de course de régulation de freinage et une deuxième partie complémentaire de course de régulation d'accélération, l'amplitude de la course de régulation de freinage étant une fonction décroissante continue par rapport à la charge de la batterie.

2. Procédé de commande suivant la revendication 1, dans lequel, quand la pédale (18) n'est pas sollicitée, on impose un couple aux roues (C) qui est une fonction de couple minimal (Cmin), continue en fonction de la vitesse (V) du véhicule et du niveau de charge ($\tau$, SOC) de la batterie, cette fonction traduisant un couple moteur ou un couple nul sur un domaine de vitesses inférieures à une vitesse limite (Vo), et cette fonction traduisant un couple résistif, non nul au moins en un point, de valeur absolue décroissante par rapport à la charge ($\tau$, SOC) de la batterie, sur un domaine de vitesses supérieures à la vitesse limite. (Vo)

3. Procédé de commande suivant l'une des revendications précédentes, dans lequel, quand la pédale (18) est à sa position de course maximale, le couple (C) imposé aux roues est une fonction de couple maximal (Cmax), cette fonction traduisant un couple qui est moteur et qui varie continûment en fonction de la seule vitesse (V) du véhicule.

4. Procédé de commande suivant la revendication 3,, dans lequel la fonction de couple maximal (Cmax) est une fonction de valeur absolue décroissante par rapport à la vitesse (V) du véhicule.

**5.** Procédé de commande suivant l'une des revendications 2 à 4, dans lequel, sur un domaine de vitesses supérieures à la vitesse limite (Vo), le point neutre (X) de la pédale (18), c'est-à-dire le déplacement de la pédale (18) pour lequel on n'impose ni couple moteur ni couple résistant à la roue, est le produit d'une première fonction de non-saturation $(1-\tau)$ qui est une fonction continue décroissante de la charge (SOC) de la batterie, et d'une deuxième fonction (f(V)) qui est une continue croissante de la vitesse du véhicule.

**6.** Procédé de commande suivant la revendication 5, dans lequel, pour une vitesse donnée du véhicule appartenant à un domaine de vitesses supérieures à la vitesse limite (Vo), la valeur du couple (C) imposé à la roue varie linéairement en fonction de l'éloignement de la pédale (18) par rapport à son point neutre (X), dans chacun des deux domaines de déplacement de la pédale de part et d'autre du point neutre.

**7.** Procédé de commande suivant l'une des revendications 5 ou 6, dans lequel, pour une vitesse donnée du véhicule, inférieure à la vitesse limite (Vo), la valeur du couple imposé à la roue varie linéairement sur toute la course de la pédale (18).

**8.** Procédé de commande suivant l'une des revendications 2 à 7, dans lequel la fonction de couple minimal (Cmin) est obtenue à partir d'une fonction de référence $(Cmin_o)$, cartographiée en fonction de la vitesse (V) du véhicule, en imposant à cette fonction (Cmin) de ne pas descendre en dessous d'un couple seuil de recharge(Csat) correspondant à un couple résistif ou nul, le couple seuil de recharge ayant une valeur absolue continûment décroissante par rapport à la charge $(\tau, SOC)$ de la batterie.

**9.** Procédé de commande suivant les revendications 5 et 8 combinées, dans lequel, pour une charge donnée de la batterie, la fonction de non-saturation $(1-\tau)$ est égale au quotient du couple seuil de recharge (Csat) correspondant à cette charge de la batterie, par la valeur du plus fort couple résistif $(Csat_{max})$ de la fonction de référence $(Cmin_o)$.

**10.** Système de commande du couple aux roues d'un véhicule (1) équipé d'au moins un moteur électrique (8) relié à une batterie (9) et relié à au moins une roue motrice (5), le moteur étant apte à fonctionner en générateur pour recharger la batterie en décélérant le véhicule, le système comprenant une pédale d'accélération (18) reliée à une unité de contrôle électronique (11), et l'unité de contrôle électronique étant configurée pour imposer, en fonction de la position de la pédale, un couple moteur ou un couple résistant à la roue motrice par l'intermédiaire d'un groupe motopropulseur incluant le moteur électrique (8), **caractérisé en ce que** l'unité de contrôle électronique (11) impose, sur le déplacement total de la pédale d'accélération (18), une première partie de course de régulation de freinage et impose, sur le déplacement de la pédale d'accélération, une deuxième partie complémentaire de course de régulation d'accélération dont l'amplitude est une fonction croissante continue par rapport à la charge de la batterie.

**11.** Système de commande suivant la revendication 10, dans lequel le groupe motopropulseur ne comprend que des moteurs électriques (8).

**12.** Système de commande suivant la revendication 10, dans lequel le groupe motopropulseur comprend au moins un moteur thermique (7) et au moins un moteur électrique (8).

**Patentansprüche**

**1.** Verfahren zur Steuerung des Drehmoments an den Rädern (3, 5) eines Fahrzeugs (1), das mit mindestens einem Elektromotor (8) ausgestattet ist, der mit einer Batterie (9) verbunden ist und mit mindestens einem Antriebsrad (5) verbunden ist, wobei der Motor in der Lage ist, als Generator zu arbeiten, um die Batterie wieder aufzuladen und dabei das Fahrzeug zu verzögern, wobei auf der Gesamtverlagerung des Fahrpedals (18) des Fahrzeugs ein erster Bremsregelungsweg-Teil und ein zweiter, komplementärer Beschleunigungsregelungsweg-Teil festgelegt werden, wobei die Größe des Bremsregelungsweges eine stetige fallende Funktion in Bezug auf die Ladung der Batterie ist.

**2.** Verfahren zur Steuerung nach Anspruch 1, wobei, wenn das Pedal (18) nicht betätigt wird, ein Drehmoment (C) an die Räder angelegt wird, welches eine Funktion des minimalen Drehmoments (Cmin) ist, die stetig als Funktion der Geschwindigkeit (V) des Fahrzeugs und des Ladezustands $(\tau, SOC)$ der Batterie ist, wobei diese Funktion ein Antriebsdrehmoment oder ein Drehmoment null in einem Bereich von Geschwindigkeiten zum Ausdruck bringt, die niedriger als eine Grenzgeschwindigkeit (Vo) sind, und wobei diese Funktion ein Widerstandsdrehmoment, das an mindestens einem Punkt von null verschieden ist, mit einem fallenden absoluten Betrag in Bezug auf die Ladung $(\tau, SOC)$ der Batterie in einem Bereich von Geschwindigkeiten zum Ausdruck bringt, die höher als die Grenzgeschwindigkeit (Vo) sind.

3. Verfahren zur Steuerung nach einem der vorhergehenden Ansprüche, wobei, wenn sich das Pedal (18) in seiner Position des maximalen Weges befindet, das Drehmoment (C), das an die Räder angelegt wird, eine Funktion des maximalen Drehmoments (Cmax) ist, wobei diese Funktion ein Drehmoment zum Ausdruck bringt, welches ein Antriebsdrehmoment ist und welches sich in Abhängigkeit allein von der Geschwindigkeit (V) des Fahrzeugs stetig ändert.

4. Verfahren zur Steuerung nach Anspruch 3, wobei die Funktion des maximalen Drehmoments (Cmax) eine Funktion mit einem fallenden absoluten Betrag in Bezug auf die Geschwindigkeit (V) des Fahrzeugs ist.

5. Verfahren zur Steuerung nach einem der Ansprüche 2 bis 4, wobei in einem Bereich von Geschwindigkeiten, die höher als die Grenzgeschwindigkeit (Vo) sind, der neutrale Punkt (X) des Pedals (18), das heißt die Verlagerung des Pedals (18), für welche weder ein Antriebsdrehmoment noch ein Widerstandsdrehmoment an das Rad angelegt wird, das Produkt einer ersten Funktion der Nicht-Sättigung $(1-\tau)$, welche eine fallende stetige Funktion der Ladung (SOC) der Batterie ist, und einer zweiten Funktion (f(V)) ist, welche eine wachsende stetige der Geschwindigkeit des Fahrzeugs ist.

6. Verfahren zur Steuerung nach Anspruch 5, wobei für eine gegebene Geschwindigkeit des Fahrzeugs, die einem Bereich von Geschwindigkeiten angehört, die höher als die Grenzgeschwindigkeit (Vo) sind, der Wert des an das Rad angelegten Drehmoments (C) sich in Abhängigkeit von der Entfernung des Pedals (18) von seinem neutralen Punkt (X) in jedem der beiden Bereiche der Verlagerung des Pedals beiderseits des neutralen Punktes linear ändert.

7. Verfahren zur Steuerung nach Anspruch 5 oder 6, wobei für eine gegebene Geschwindigkeit des Fahrzeugs, die niedriger als eine Grenzgeschwindigkeit (Vo) ist, der Wert des an das Rad angelegten Drehmoments sich auf dem gesamten Weg des Pedals (18) linear ändert.

8. Verfahren zur Steuerung nach einem der Ansprüche 2 bis 7, wobei die Funktion des minimalen Drehmoments (Cmin) aus einer Referenzfunktion (Cmin$_0$) erhalten wird, die in Abhängigkeit von der Geschwindigkeit (V) des Fahrzeugs kartografiert wird, indem für diese Funktion (Cmin) vorgeschrieben wird, nicht unter ein Schwellenwert-Drehmoment der Wiederaufladung (Csat) zu fallen, das einem Widerstandsdrehmoment oder Drehmoment null entspricht, wobei das Schwellenwert-Drehmoment der Wiederaufladung einen stetig fallenden absoluten Betrag in Bezug auf die Ladung $(\tau, SOC)$ der Batterie aufweist.

9. Verfahren zur Steuerung nach den kombinierten Ansprüchen 5 bis 8, wobei für eine gegebene Ladung der Batterie die Funktion der Nicht-Sättigung $(1-\tau)$ gleich dem Quotienten des Schwellenwert-Drehmoments der Wiederaufladung (Csat), das dieser Ladung der Batterie entspricht, durch den Wert des größten Widerstandsdrehmoments (Csat$_{max}$) der Referenzfunktion (Cmin$_0$) ist.

10. System zur Steuerung des Drehmoments an den Rädern eines Fahrzeugs (1), das mit mindestens einem Elektromotor (8) ausgestattet ist, der mit einer Batterie (9) verbunden ist und mit mindestens einem Antriebsrad (5) verbunden ist, wobei der Motor in der Lage ist, als Generator zu arbeiten, um die Batterie wieder aufzuladen und dabei das Fahrzeug zu verzögern, wobei das System ein Fahrpedal (18) umfasst, das mit einer elektronischen Steuereinheit (11) verbunden ist, und wobei die elektronische Steuereinheit dafür eingerichtet ist, in Abhängigkeit von der Position des Pedals ein Antriebsdrehmoment oder ein Widerstandsdrehmoment über ein Antriebsaggregat, das den Elektromotor (8) enthält, an das Antriebsrad anzulegen, **dadurch gekennzeichnet, dass** die elektronische Steuereinheit (11) auf der Gesamtverlagerung des Fahrpedals (18) einen ersten Bremsregelungsweg-Teil festlegt und auf der Verlagerung des Fahrpedals einen zweiten, komplementären Beschleunigungsregelungsweg-Teil festlegt, dessen Größe eine stetige wachsende Funktion in Bezug auf die Ladung der Batterie ist.

11. System zur Steuerung nach Anspruch 10, wobei das Antriebsaggregat ausschließlich Elektromotoren (8) umfasst.

12. System zur Steuerung nach Anspruch 10, wobei das Antriebsaggregat mindestens einen Verbrennungsmotor (7) und mindestens einen Elektromotor (8) umfasst.

**Claims**

1.  Method for controlling the torque at the wheels (3, 5) of a vehicle (1) equipped with at least one electric motor (8) connected to a battery (9) and connected to at least one driven wheel (5), the motor being able to operate as a generator to recharge the battery while decelerating the vehicle, in which method a braking-regulating first part of travel and an acceleration-regulating second part of travel are imposed on the total movement of the vehicle throttle pedal (18), the amplitude of braking-regulating travel being a continuous decreasing function of the battery charge.

2.  Control method according to Claim 1, in which, when there is no action on the pedal (18), a torque (C) is applied at the wheels which is a minimum torque function (Cmin) that is a continuous function of vehicle speed (V) and of battery charge ($\tau$, SOC), this function being indicative of a motive torque or of a torque that is zero over a range of speeds lower than a limit speed (Vo), and this function being indicative of a resistive torque that is non-zero at least at one point, of an absolute value that decreases with respect to the battery charge ($\tau$, SOC), over a range of speeds higher than the limit speed (Vo).

3.  Control method according to either of the preceding claims, in which, when the pedal (18) is in its maximum-travel position, the torque (C) imposed at the wheels is a maximum torque function (Cmax), this function being indicative of a torque that is motive and that varies continuously as a function of vehicle speed (V) alone.

4.  Control method according to Claim 3, in which the maximum torque function (Cmax) is a function the absolute value of which decreases with respect to vehicle speed (V).

5.  Control method according to one of Claims 2 to 4, in which, over a range of speeds higher than the limit speed (Vo), the neutral point (X) of the pedal (18), which means to say the movement of the pedal (18) for which neither a motive torque nor a resistive torque is applied to the wheel, is the product of a first continuous non-saturation function (i-$\tau$) that is a continuous decreasing function of the charge (SOC) of the battery, and of a second function (f(V)) that is a continuous increasing of the speed of the vehicle.

6.  Control method according to Claim 5, in which, for a given vehicle speed belonging to a range of speeds higher than the limit speed (Vo), the value of the torque (C) imposed on the wheel varies as a linear function of the distance of the pedal (18) away from its neutral point (X), in each of the two ranges of movement of the pedal on each side of the neutral point.

7.  Control method according to either of Claims 5 and 6, in which, for a given vehicle speed lower than the limit speed (Vo), the value of the torque imposed on the wheel varies linearly over the entire travel of the pedal (18).

8.  Control method according to one of Claims 2 to 7, in which the minimum torque function (Cmin) is obtained from a reference function ($Cmin_0$), that is mapped as a function of vehicle speed (V), by imposing on this function ($Cmin_0$) not to drop below a threshold recharge torque (Csat) corresponding to a resistive or zero torque, the threshold recharge torque having an absolute value that is continuously decreasing with respect to the battery charge ($\tau$, SOC) .

9.  Control method according to Claims 5 and 8 combined, in which, for a given battery charge, the non-saturation function (i-$\tau$) is equal to the quotient of the threshold recharge torque (Csat) corresponding to this battery charge, divided by the highest resistive torque value ($Csat_{max}$) of the reference function ($Cmin_0$).

10. System for controlling the torque at the wheels of a vehicle (1) equipped with at least one electric motor (8) connected to a battery (9) and connected to at least one driven wheel (5), the motor being able to operate as a generator in order to recharge the battery while decelerating the vehicle, the system comprising a throttle pedal (18) connected to an electronic control unit (11), and the electronic control unit being configured to impose, according to the position of the pedal, a motive torque or a resistive torque on the driven wheel via a power train that includes the electric motor (8), **characterized in that** the electronic control unit (11) imposes, on the total movement of the throttle pedal (18), a braking-regulating first part of travel and imposes, on the movement of the throttle pedal, a complementary acceleration-regulating second part of travel the amplitude of which is a continuous increasing function of battery charge.

11. Control system according to Claim 10, in which the power train comprises only electric motors (8).

12. Control system according to Claim 10, in which the power train comprises at least one combustion engine (7) and at least one electric motor (8).

# FIG.1

## FIG.2

## FIG.3

## FIG.4

$Cmin\,(\tau,\,V)$

$\tau=\tau_{max}$

$\tau=0$

$0$   $V_0$   $V$

$C$   $\tau$

## FIG.5

$C$

$\alpha = 1$
$Cmax1$

$A$

$Cmax$

$V_0$   $V_1$   $V$

$0$   $\alpha = x$

$Csat(\tau)$

$\alpha = 0$
$Cmin1$

$B$

$Cmin(\tau)$

# FIG.6

## FIG.7

EP 2 429 854 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2749229
- US 20050189894 A
- US 2006137925 A